# FASCICULE DE BREVET EUROPEEN

(11) **EP 3 204 978 B1**
(45) Date de publication et mention de la délivrance du brevet: **31.10.2018**
(21) Numéro de dépôt: 15771687.9
(22) Date de dépôt: 14.09.2015
(51) Int. Cl.: H01M 10/6567, H01M 10/625, A62C 3/07, A62C 3/16

(54) **SYSTÈME DE BATTERIES POUR VÉHICULE COMPORTANT DES PENTES DE RÉPARTITION DE L'EAU DE REFROIDISSEMENT**
BATTERIESYSTEM FÜR EIN FAHRZEUG MIT STEIGUNGEN ZUR VERTEILUNG VON KÜHLWASSER
BATTERY SYSTEM FOR VEHICLE, COMPRISING SLOPES FOR DISTRIBUTING COOLING WATER

(30) Priorité: 09.10.2014 FR 1459681
(43) Date de publication de la demande: 16.08.2017
(73) Titulaire: PSA Automobiles SA, 78300 Poissy (FR)
(72) Inventeur: FLOQUET, Stephane, 91400 Orsay (FR); FERIOT, Bertrand, 91430 Vauhallan (FR); PINSON, Mathieu, 77400 Thorigny sur Marne (FR); DESJARDINS, Walter, 91800 Brunoy (FR)
(86) Numéro de dépôt international: PCT/FR2015/052449
(87) Numéro de publication internationale: WO 2016/055708

(56) Documents cités:
- WO-A1-2011/084476
- WO-A1-2013/132179
- DE-A1-102011 080 706
- FR-A1- 2 991 258
- FR-A1- 2 991 923
- JP-A- H09 266 016

## Description

La présente invention concerne un système de batteries prévu pour faciliter l'extinction des incendies, ainsi qu'un véhicule automobile hybride ou électrique équipé d'un tel système de batteries.

Les véhicules hybrides ou électriques comportent pour la traction des accumulateurs d'énergie comprenant des cellules électrochimiques délivrant une haute tension, appelés par la suite batteries, qui peuvent être réalisées suivant différentes technologies connues.

Les batteries permettent de récupérer une énergie produite lors des freinages du véhicule, pour délivrer un courant à un moteur électrique de traction. Sur certains véhicules, les batteries peuvent aussi être rechargées directement à partir d'un réseau extérieur de distribution d'électricité.

Les batteries de traction disposées dans un compartiment fermé, comportent habituellement un système de refroidissement pour assurer les performances, la durée de vie ainsi que la sécurité. En particulier les cellules au lithium-ion disposant d'une forte densité d'énergie en fonction de la masse, nécessitent un suivi particulier de leurs conditions de fonctionnement, comme la tension ou la température, et un système de refroidissement pour les maintenir dans une plage de température réduite.

Cependant suivant la technologie utilisée, en cas de forte élévation accidentelle de la température, les cellules électrochimiques peuvent émettre des fluides chauds sous pression qui sont toxiques et inflammables. On peut obtenir ainsi un départ d'incendie dans le compartiment comportant les batteries, qui peut se propager ensuite au véhicule.

Par ailleurs compte-tenu de leurs dimensions et de leurs masses, les batteries sont généralement installées sous le plancher du véhicule, et entourées par des éléments de renfort comme des traverses ou des longerons afin de les supporter et de les protéger lors des chocs. En cas de départ d'incendie, l'accès à ces batteries dans leur compartiment par les pompiers pour les arroser d'eau afin de les refroidir et d'éteindre le feu, est généralement difficile.

Pour éteindre un tel incendie, un système connu d'accès rapide, présenté notamment par le document FR-A1-2991258, comporte un conduit débouchant dans le compartiment des batteries, présentant vers l'extérieur du véhicule une entrée d'eau qui est fermée par un système d'obstruction s'ouvrant automatiquement en fonction des conditions provoquées par cet incendie, comme la chaleur.

Un autre système connu pour éteindre un départ d'incendie, présenté notamment par le document FR-A1-2991923, comporte un système d'accès rapide aux batteries comprenant un orifice situé sur le dessus du compartiment de ces batteries, qui est équipé d'un opercule thermo-fusible.

En cas de départ d'incendie l'opercule fond sous la chaleur dégagée, ce qui permet aux pompiers en arrosant la zone contenant l'orifice, qui peut être en particulier situé sur un plancher à l'arrière, d'obtenir un débit d'eau qui rentre dans le compartiment et coule sur les batteries.

Il est connu aussi d'alimenter en eau le compartiment des batteries par d'autres canaux d'alimentation, comme des longerons de la structure du véhicule.

Wo2013132179 comporte un système de buses de diffusion afin de répartir un liquide de refroidissement sur les surfaces des cellules de batterie.

Cependant si ces différents systèmes permettent un accès au compartiment des batteries par un débit d'eau de refroidissement, ils peuvent laisser en fonction des possibilités d'écoulement dans ce compartiment, certaines zones chaudes qui risquent alors d'entraîner de nouveau départs d'incendie.

La présente invention a notamment pour but d'éviter ces inconvénients de la technique antérieure.

Elle propose à cet effet un système de batteries pour véhicule hybride ou électrique, comportant des cellules électrochimiques disposées dans un compartiment fermé, ce système étant prévu pour recevoir un débit d'eau venant d'un point d'alimentation extérieur afin de refroidir les cellules en cas d'échauffement ou d'incendie, caractérisé en ce qu'il comporte sur le dessus du compartiment des pentes de répartition assurant une répartition de l'eau venant du point d'alimentation sur l'ensemble des cellules selon les revendications déposées.

Un avantage de ce système de batteries est que de manière simple et économique, avec des formes disposées judicieusement pour recevoir le débit d'eau, on dirige ce flux sur toutes les cellules ce qui permet de refroidir chacune d'elles, en particulier les plus éloignées de cet orifice, afin d'éviter un point chaud et une reprise d'incendie venant de l'une quelconque de ces cellules.

Le système de batteries selon l'invention peut de plus comporter une ou plusieurs des caractéristiques suivantes, qui peuvent être combinées entre elles.

Selon l'invention les pentes de répartition sont formées sur la face supérieure du compartiment fermé.

Dans ce cas, les pentes de répartition peuvent comporter des zones prédisposées au-dessus des cellules électrochimiques, formant automatiquement des perçages avec la chaleur.

Avantageusement, les pentes de répartition sont entourées de rebords réalisant une rétention d'eau sur ces pentes.

L'invention a aussi pour objet un véhicule automobile hybride ou électrique comportant un système de batteries alimentant des machines de traction, qui présente l'une quelconque des caractéristiques précédentes.

En particulier, le véhicule peut comporter un plancher recouvrant le système de batteries, présentant un orifice d'alimentation en eau des pentes de répartition.

Avantageusement, l'orifice d'alimentation en eau est équipé d'un opercule thermo-fusible.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 présente une vue de dessus du plancher arrière d'un véhicule hybride, recevant en dessous un système de batteries selon l'invention ;
- la figure 2 est un schéma en coupe transversale de ce système de batteries ;
- la figure 3 est un schéma en coupe longitudinale de ce système de batteries ;
- la figure 4 est un schéma en coupe longitudinale de ce système de batteries suivant une variante ;
- la figure 5 est un schéma en coupe transversale d'un système de batteries suivant une variante ; et
- la figure 6 est un schéma en coupe transversale d'un système de batteries suivant une autre variante.

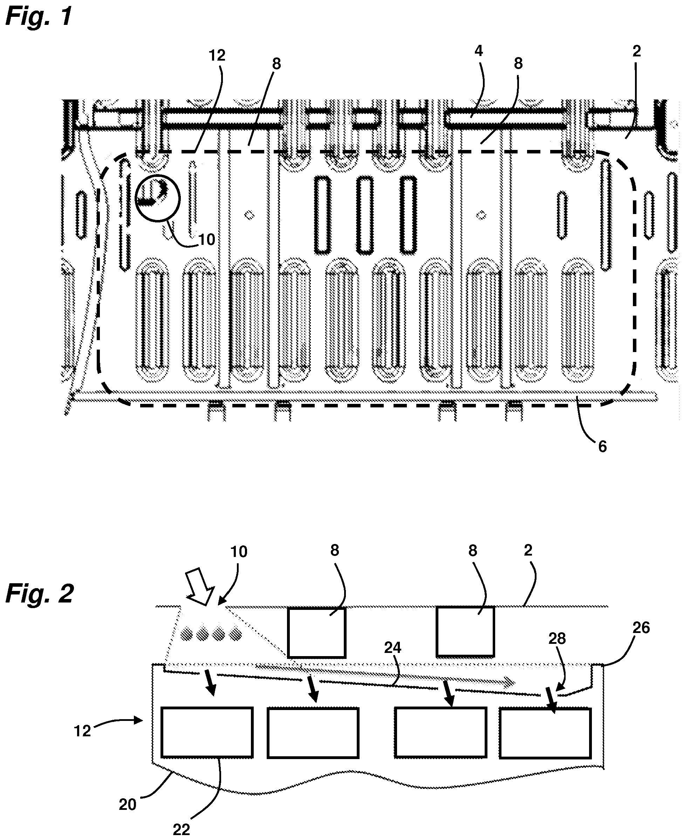

Les figures 1 et 2 présentent un système de batteries 12 formant un ensemble sensiblement parallélépipédique fixé à plat sous un plancher arrière du véhicule 2, comprenant des cellules électrochimiques 22 contenues dans un compartiment fermé 20. Le compartiment fermé 20 permet de protéger les cellules 22 et leurs contacts électriques, en particulier des projections extérieures d'eau ou de poussière, et de l'air ambiant, pour assurer leur intégrité ainsi que la sécurité.

Le plancher arrière 2 comporte vers l'avant une traverse 4 et vers l'arrière un rebord de ce plancher 6, qui constituent des renforts encadrant le système de batteries 12 se trouvant en dessous. Le plancher est renforcé de plus par deux renforts 8 longitudinaux fixés en dessous, venant au-dessus du système de batteries 12.

Les différents renforts 4, 8 encadrant le système de batteries 12 présentant une masse importante, constituent des moyens rigides qui permettent la fixation de ce système tout en résistant aux contraintes de tenue en endurance et aux vibrations, et qui assure une protection entourant ce système afin d'éviter ou de limiter sa déformation en cas d'accident.

En variante il est connu de fixer le système de batterie sur un support entourant et protégeant ce système, qui est lui-même fixé sous le plancher du véhicule.

Le plancher 2 comporte au-dessus du système de batteries 12 un orifice latéral 10 débouchant dans l'habitacle, qui permet un débit d'eau important en cas d'incendie. Dans ce cas les pompiers dirigent leur lance à incendie directement sur l'orifice 10, ou dans l'habitacle en général pour que l'eau descende dans cet orifice par gravité.

La face supérieure du compartiment fermé 20 comporte des formes particulières comprenant des pentes 24 et des rebords extérieurs 26, qui reçoivent en partie haute le débit d'eau venant de l'orifice du plancher 10, et laissent ce débit s'écouler par gravité suivant les pentes pour le répartir sur toute la surface des cellules électrochimiques 22.

Les pentes 24 comportent des zones prédisposées au-dessus des cellules électrochimiques 22, formant automatiquement des perçages 28 avec la chaleur en cas d'incendie, par exemple par fusion d'un matériau de fermeture, présentant des sections de passage ajustées de manière à répartir le débit d'eau sur chacune de ces cellules afin d'assurer le refroidissement de toutes les cellules.

Les rebords extérieurs 26 de la face supérieure du compartiment 20, permettent de stocker une certaine quantité d'eau sur les pentes 24 afin de s'assurer du débit par tous les perçages 28.

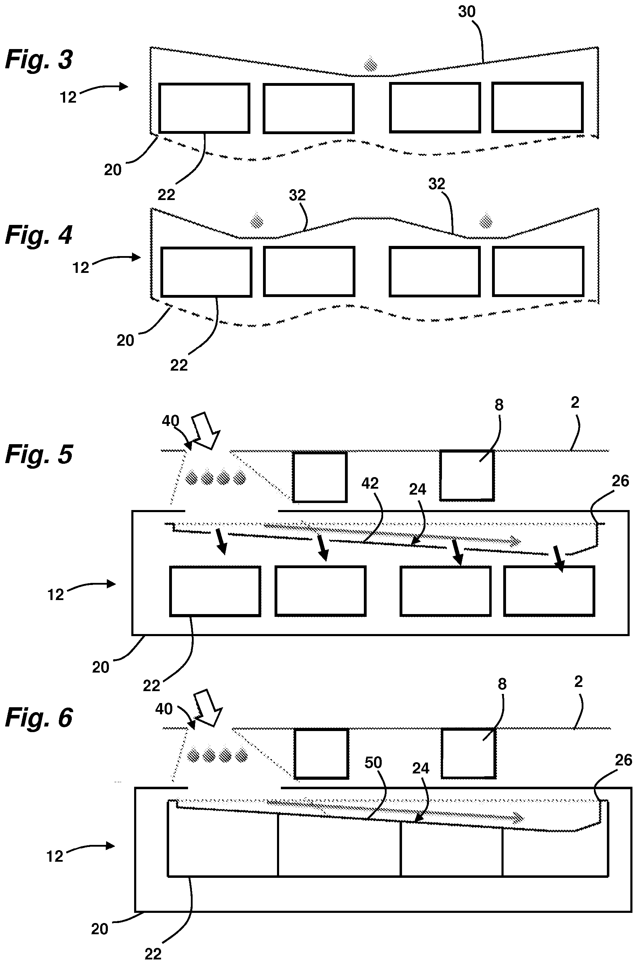

Les figures 3 et 4 présentent en coupe longitudinale un arrangement des pentes 24, formant respectivement un seul canal central 30 ou deux canaux latéraux 32, de manière à répartir le débit d'eau de manière sensiblement régulière sur l'ensemble de la surface du système de batteries 12.

La figure 5 ne faisant pas partie de l'invention, présente le compartiment fermé 20 comportant un perçage d'entrée 40 disposé en-dessous de l'orifice 10 du plancher 2, qui fait déboucher le débit d'eau sur un capot intérieur de répartition 42 recouvrant l'ensemble des cellules électrochimiques 22.

Le capot 42 comporte des pentes 24 répartissant le débit d'eau sur l'ensemble de la surface du système de batteries 12, des perçages de ce capot de section ajustée 44 permettant de faire couler l'eau sur chacune des cellules électrochimiques 22 afin de toutes les refroidir individuellement. De la même manière des rebords extérieurs 26 assurent une certaine rétention d'eau sur le capot 42.

La figure 6 ne faisant pas partie de l'invention, présente le compartiment fermé 20 comportant un perçage d'entrée 40 disposé en-dessous de l'orifice 10 du plancher 2, qui fait déboucher le débit d'eau directement sur le couvercle supérieur 50 des cellules électrochimiques 22.

L'ensemble des couvercles supérieurs 50 des cellules électrochimiques 22 forme des pentes 24 assurant un écoulement et une répartition du débit d'eau venant du perçage d'entrée 40, sur l'ensemble de ces cellules. Des rebords extérieurs 26 sur l'ensemble des cellules 22, permettent aussi une rétention d'eau sur ces cellules pour améliorer leur refroidissement.

On obtient ainsi une arrivée d'eau venant directement sur les cellules électrochimiques 22, avec un flux réparti sur toutes les cellules.

D'une manière générale on obtient de manière simple et économique, en réalisant seulement des formes particulières sur le dessus du compartiment fermé 20, une sécurité qui permet de garantir le refroidissement des cellules les plus éloignées de l'entrée d'eau dans ce compartiment.

On peut avantageusement disposer sur l'orifice 10 percé sur le plancher 2 du véhicule, un opercule thermo-fusible qui se percera automatiquement sous l'effet de la chaleur dégagée par les cellules électrochimiques défaillantes, ce qui permet d'obtenir quand les pompiers arrosent l'intérieur du véhicule, un débit d'eau qui s'écoule sur les pentes de répartition 24.

Le système de batteries selon l'invention peut être utilisé avantageusement avec des accumulateurs au lithium-ion comportant des risques plus importants, mais aussi avec tous types de cellules électrochimiques susceptibles de s'échauffer et de produire des fluides inflammables.

## Revendications

1. Système de batteries pour véhicule hybride ou électrique, comportant des cellules électrochimiques (22) disposées dans un compartiment fermé (20), ce système étant prévu pour recevoir un débit d'eau venant d'un point d'alimentation extérieur (10) afin de refroidir les cellules en cas d'échauffement ou d'incendie, **caractérisé en ce qu'**il comporte sur le dessus du compartiment des pentes de répartition (24) assurant une répartition de l'eau venant du point d'alimentation (10) sur l'ensemble des cellules (22) et **en ce que** les pentes de répartition (24) sont formées sur la face supérieure du compartiment fermé (20).

2. Système de batteries selon la revendication 1, **caractérisé en ce que** les pentes de répartition (24) comportent des zones prédisposées au-dessus des cellules électrochimiques (22), formant automatiquement des perçages (28) avec la chaleur.

3. Système de batteries selon l'une quelconque des revendications précédentes, **caractérisé en ce que** les pentes de répartition (24) sont entourées de rebords (26) réalisant une rétention d'eau sur ces pentes.

4. Véhicule automobile hybride ou électrique comportant un système de batteries alimentant des machines de traction, **caractérisé en ce que** ces systèmes de batteries sont réalisés suivants l'une quelconque des revendications précédentes.

5. Véhicule automobile selon la revendication 4, **caractérisé en ce qu'**il comporte un plancher (2) recouvrant le système de batteries (20), présentant un orifice (10) d'alimentation en eau des pentes de répartition (24).

6. Véhicule automobile selon la revendication 5, **caractérisé en ce que** l'orifice d'alimentation en eau (10) est équipé d'un opercule thermo-fusible.

## Patentansprüche

1. Batteriensystem für Hybrid- oder Elektrofahrzeug, dass elektrochemische Zellen (22) umfasst, die in einem geschlossenen Fach (20) angeordnet sind, wobei dieses System vorgesehen ist, um einen Wasserdurchsatz zu empfangen der von einer äußeren Versorgungsstelle (10) kommt, um die Zellen bei Erhitzen oder Brand abzukühlen, **dadurch gekennzeichnet, dass** es auf der Oberseite des Fachs Verteilungssteigungen (24) umfasst, die eine Verteilung des Wassers, das von der Versorgungsstelle (10) kommt, auf sämtlichen Zellen (22) sicherstellen, und dass diese Verteilungssteigungen (24) auf der oberen Fläche des geschlossenen Fachs (20) gebildet sind.

2. Batteriensystem nach Anspruch 1, **dadurch gekennzeichnet, dass** die Verteilungssteigungen (24) Zonen umfassen, die vorab oberhalb der elektrochemischen Zellen (22) angeordnet sind, die automatisch Bohrungen (28) mit der Hitze bilden.

3. Batteriensystem nach einem der vorhergehenden Ansprüche, **dadurch gekennzeichnet, dass** die Verteilungssteigungen (24) von Leisten (26) umgeben sind, die auf diesen Steigungen eine Rückhaltung von Wasser herstellen.

4. Hybrid- oder Elektrokraftfahrzeug, das ein System aus Batterien umfasst, das Zugmaschinen versorgt, **dadurch gekennzeichnet, dass** diese Systeme von Batterien gemäß einem der vorhergehenden Ansprüche hergestellt sind.

5. Kraftfahrzeug nach Anspruch 4, **dadurch gekennzeichnet, dass** es einen Fußboden (2) umfasst, der das Batteriensystem (20) bedeckt, der eine Öffnung (10) zum Versorgen mit Wasser der Verteilungssteigungen (24) aufweist.

6. Kraftfahrzeug nach Anspruch 5, **dadurch gekennzeichnet, dass** die Wasserversorgungsöffnung (10) mit einem Wärme schmelzbaren Verschlusselemente ausgestattet ist.

## Claims

1. A battery system for a hybrid or electric vehicle, comprising electrochemical cells (22) arranged in a closed compartment (20), this system being provided to receive a flow of water coming from an external supply point (10) in order to cool the cells in the event of heating or fire, **characterized in that** it comprises, on the top of the compartment, distribution slopes (24) ensuring a distribution of the water coming from the supply point (10) over all of the cells (22) and **in that** the distribution slopes (24) are formed on the upper face of the closed compartment (20).

2. The battery system according to Claim 1, **characterized in that** the distribution slopes (24) comprise zones prearranged above the electrochemical cells (22), automatically forming bores (28) with the heat.

3. The battery system according to any one of the preceding claims, **characterized in that** the distribution slopes (24) are surrounded by rims (26) realizing a retention of water on these slopes.

4. A hybrid or electric motor vehicle comprising a battery system supplying traction engines, **characterized in that** these battery systems are realized according to any one of the preceding claims.

5. A motor vehicle according to Claim 4, **characterized in that** it comprises a floor (2) covering the battery system (20), having an opening (10) for the supplying with water of the distribution slopes (24).

6. The motor vehicle according to Claim 5, **characterized in that** the water supply opening (10) is equipped with a thermofusible cover.
